# EUROPEAN PATENT SPECIFICATION

(11) **EP 1 789 720 B1**
(45) Date of publication and mention of the grant of the patent: **12.12.2012**
(21) Application number: 05787794.6
(22) Date of filing: 18.08.2005
(51) Int. Cl.: F16M 1/00, F16M 13/00

(54) **TRANSITION BASE**
ÜBERGANGSBASIS
BASE DE TRANSITION

(30) Priority: 18.08.2004 US 602576 P
(43) Date of publication of application: 30.05.2007
(73) Proprietor: Fielding, Timothy, Michigan 49053 (US)
(72) Inventor: FIELDING, Timothy, Galesburg, Michigan 49053 (US)
(74) Representative: Jansen, Cornelis Marinus
(86) International application number: PCT/US2005/029388
(87) International publication number: WO 2006/023638

(56) References cited:
- CH-A5- 638 880
- DE-C- 724 257
- US-A- 3 228 638
- US-A- 3 687 440
- US-A- 4 635 764
- US-A- 4 635 764

## Description

### BACKGROUND OF THE INVENTION

The present invention relates to a transition base that dampens vibration between an industrial rotating apparatus and an associated foundation. In particular, the invention relates to a transition base assembly in which tubes, ribs, and vibration dampening aggregate are incorporated into the transition base in order to absorb and disperse transmission of vibration from the operation of an industrial machine, including an electric, solar, or fossil powered motor, generator, gearbox, pump, fan, or other apparatus, for example.

The use of industrial apparatus with driven rotary shafts in combination with machine components is well known. An industrial rotating apparatus is typically mounted in a fixed location relative to a corresponding machine component, either to the machine itself, or to a structure which is also fixed relative to the machine.

Older rotating apparatus are often remanufactured, wherein mechanical and electrical components are repaired or replaced. When an apparatus is rebuilt or replaced, the dimensions of the industrial apparatus are often smaller as a result of newer, more compact components. Older rotating apparatus are typically larger than new or rebuilt rotating apparatus because of more compact components, which results in a variation of the final height of a drive or driven shaft. If the height difference is not accommodated when the new or rebuilt industrial rotating apparatus is placed directly on a preexisting foundation, the shaft will be out of alignment with, commonly closer to the ground than, a corresponding machine.

Accordingly, a transition base is required to lift or relocate the industrial apparatus into alignment with the corresponding machine components to compensate for the smaller size of the new or rebuilt apparatus. A transition base at least maintains the shaft of the new or rebuilt industrial rotating apparatus in the same alignment as prior to replacement or reworking of the components and may provide and improvement.

A problem with prior transition bases is that they do not mitigate and may amplify unwanted vibration caused by the rotating apparatus. This may adversely impact the efficiency and performance of an industrial rotating apparatus. In addition, vibration from an industrial rotating apparatus may be transmitted to a motor shaft, which places stress on the corresponding machine components.

Another problem with prior systems is that when an industrial rotating apparatus is operating, torque compounds and produces translational forces that urge the motor to rotate off of its base.

### BRIEF SUMMARY OF THE INVENTION

These and other problems of the prior transition bases are overcome with the present invention by providing a transition base according to the features of claim 1, having a tubular vibration dampening system that absorbs and disperses transmission of vibration generated by an industrial rotating apparatus and restrains such vibration from being transmitted through the industrial rotating apparatus to a shaft of the machine component.

A preferred embodiment of this invention contemplates a plurality of cylindrical, concave, convex, or other type of configuration of tubes, which are filled with an aggregate, which may include silica sand or another aggregate for example, for purposes of eliminating vibration from the operation of industrial rotating apparatus by either absorbing or dispersing vibration frequencies. Advantageously, the materials used within the tubes may be multifaceted. Smooth curves or facets on the tubes may be utilized. The tubes may be square, circular, or the like.

Certain tubes in the present invention may be substantially hollow. These tubes take on the aspect of tuning forks in which they shorten the distance for the vibration to transmit out from the industrial rotating apparatus.

Advantageously, the incorporation of ribs or gussets to the transition base creates structural rigidity to the base, preventing rotation of the base and facilitating the shedding of unwanted vibration frequencies.

It is noted that CH 638,880 discloses a gear wheel housing that comprises outer walls and inner walls spaced from the outer walls. The housing further comprises an inner base wall and an outer base wall also provided at a distance of each other. The respective walls are interconnected by means of welded-in-bearing bushes. The cavities defined by the inner and outer opposing walls are filled with a mixture of gravel, sand and a synthetic resin as a binding agent, which mixture provides the gear wheel housing with damping properties.

### BRIEF DESCRIPTION OF THE SEVERAL VIEWS OF THE DRAWING

FIG. 1 is a perspective view of a transition base according to the invention, showing in phantom a schematic representation of a motor supported by the base;
FIG. 2 is a top plan view of the transition base;

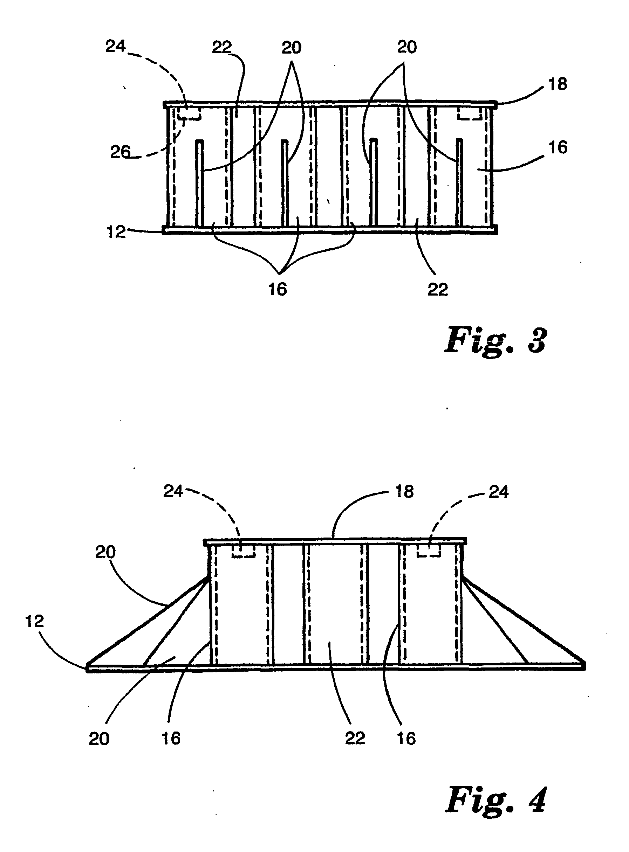

FIG. 3 is a front elevation view thereof;
FIG. 4 is a side elevation view thereof;
FIG. 5 is a top plan view of a top plate thereof;
FIG. 6 is a front elevation view thereof;
FIG. 7 is a side elevation view thereof;
FIG. 8 is a side elevation view of a first exemplary alternative column of a transition base according to the invention; and
FIG. 9 is a side elevation view of a second exemplary alternative column of a transition base according to the invention.

### DETAILED DESCRIPTION

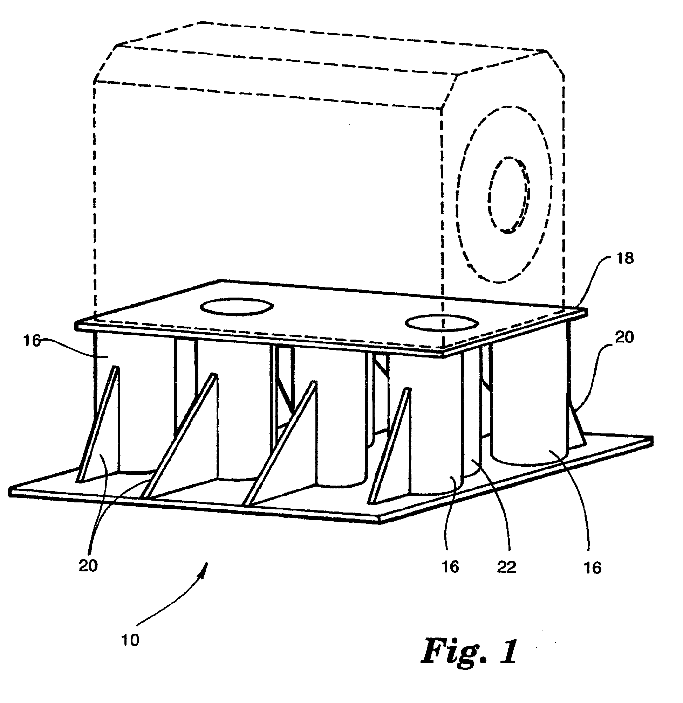

The principles of the invention are disclosed by way of example, in the embodiments described herein and illustrated in the drawing figures. The present invention is particularly advantageous when employed in combination with a large industrial rotating apparatus although the invention is not limited to use in such an environment. The concept of the transition base invention may be used with a selected industrial rotating apparatus, including and not limited to pumps, gear boxes, fans, and any rotating machine. A transition base of the invention may be useful in any situation in which vibration may present a problem. In order to disclose a preferred embodiment of the invention, however, a transition base for a replacement electrical motor has been selected as an example (FIG. 1).

A transition base 10 is generally shown in the drawing with a rectangular base 5 plate 12. While the base plate 12 may commonly be rectangular, it is not required to be rectangular. Rather, the base plate 12 is a mounting plate that is adapted to mate with a preexisting foundation of a prior mechanical apparatus, an electric motor in this example. The base plate 12 further has a mounting surface that faces and abuts the foundation.

A plurality of mounting holes 14 extend through the base plate 12. The mounting holes 14 are disposed about the base plate 12 in a predetermined pattern according to a mounting fastener pattern of the preexisting foundation and the corresponding prior machine, namely, a motor in this example. The machine mounting fasteners may be any suitable fastener and commonly include bolts and nuts or bolts and anchors and the like. The fasteners secure the transition base, and quite specifically the base plate 12 mounting surface, to the foundation.

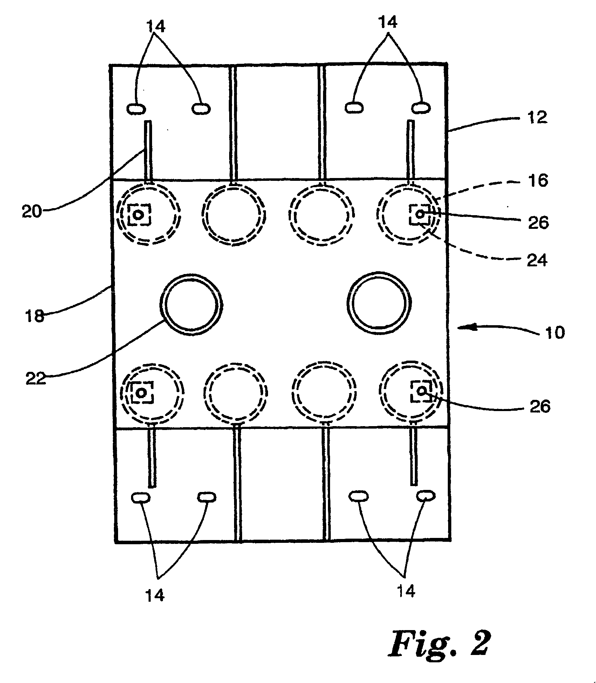

An array of structural columns 16 extend generally perpendicularly from the base plate 12 and away from the foundation and the mounting surface. A specific pattern of the array of structural columns may be determined according to the structural requirements, including static and dynamic loading and vibration, for example, of a particular installation. The columns 16 may, as shown, define rows of aligned tubes 16 extending upward from the base plate 12 and define a center portion of the base plate 12. Additional field columns or tubes 22, disbursed among the columns 16, may also be included (FIG. 2).

A top plate 18 extends over and covers the array of columns 16 and 22, generally covering the center portion of the base plate 12. The top plate 18 has a second mounting surface that faces away from the foundation, opposite to the first mounting surface of the base plate 12.

Analogous to the base plate 12, the top plate 18 has mounting blocks 24 with mounting holes 26 located about the top plate in a predetermined pattern according to a mounting fastener pattern of the replacement motor in this example.

The mounting holes 26 may be sized and tapped for threaded engagement with mounting bolts to secure the replacement motor, or may be sized for clearance of the mounting bolts for though bolting with cooperating nuts, for example. Either way, the mounting blocks 24 may be provided and add structure to the top plate 18 at the fastening points. The mounting blocks 24 may further be located at an underside of the top plate 18, opposite the second mounting surface, which facilitates providing the mounting surface as a true, flat, and planar surface. Alternatively, the mounting blocks 24 may also be located at a top side of the top plate 18, opposite the underside, namely, the second mounting surface, when a particular installation may indicate that elevated mounting pads are desirable.

Each of the base plate 12, the columns 16, and the top plate 18 may be constructed of any suitable structural material and interconnected by any method appropriate to the material selected and the structural requirements of the transition base installation. The inventor has found that construction of these components of the transition base invention will commonly include steel, which may be of various alloy. Thus, the steel components may typically be welded together.

One having ordinary skill in the art, and even one having a passing knowledge, of welding will know that welding causes distortion of and stress in the welded material at the weld. The welding process may, therefore, disturb each of the opposing first and second mounting surfaces of the base plate 12 and the top plate 18, respectively. Thus, various stress relief techniques which are known to one having ordinary skill in the art, may be applied to the assembled transition base 10 to release the weld stress in the base and the top plates 12 and 18, respectively, and to true and flatten their respective first and second mounting surfaces. Further, one or another of the mounting surfaces may be ground or milled or the like to obtain a degree of precision in the relative flatness of the surface or in the relative parallel relationship between the mounting surfaces as required for a given use or installation. One who is familiar with industrial machine installation and operation understands that proper attention to machine foundation preparation is important to the subsequent operation and maintenance of the installed machine, including minimizing a development of future misalignment with use through machine drift or walking. In an optional alternative, a given installation may require mounting pads at various fastening points, which pads may have elevated mounting contact surfaces relative to the respective base or top plate mounting surface. In this alternative, the mounting pad surfaces may require an application of the truing processes just discussed above, rather than the respective base or top plate surface.

Further as to the assembly of the transition base column and plate components, additional reinforcement elements, namely, ribs or gussets 20 may be used as is understood by one having ordinary skill in the art to provide racking stiffness or support to the structure of the assembled transition base 10. Apart from the knowledge of one having ordinary skill in the art, however, the ribs 20 may further be used in the present invention to "tune" the transition base relative to vibration damping issues as may be further understood with the disclosure below.

As noted above, the replacement of industrial machinery commonly requires an adjustment of the foundation from the prior machine for the replacement machine. Thus, a transition base of the invention is useful in making the adjustment. Further, industrial machinery, even turbines and electric motors, and certainly reciprocating equipment, for example, stimulate vibration. Industrial machinery does not only stimulate vibration, it is also subject to vibration. A transition base of the invention also dampens vibration. The vibration dampening aspect of the inventive concept may be directed to the columns 16 of the present example.

The columns 16 have each of a structural element and a damping element. These elements may be separable components and may be integral features. As separable components, the columns 16 are illustrated in the drawing as tubular members that extend between the opposing first and second mounting surfaces of the respective base plate 12 and the top plate 18. The tubular member defines an interior cavity in which a separate damping element is located. More specific to the illustrated example, a tube 16 is filled with silica sand or another pourable aggregate or the like for purposes of eliminating vibration and noise from the operation of an industrial rotating apparatus by either absorbing or dispersing vibration and noise frequencies. The damping element may also include, without limitation, solid, gel, and liquid materials.

One may consider the combination of the aggregate incorporated in the tubular column 16 as analogous to a commonly known dead-blow hammer. A dead-blow hammer encases loose shot in an interior cavity, while a column 16 may encase an aggregate. When a dead-blow hammer is swung and strikes, the hammer does not bounce because not all of the mass of the hammer is in the hammer head case and is substantially in the encased shot, so the kinetic energy of the swing is also substantially in the encased shot. The shot dissipates residual energy of the swing. Similarly, the encased aggregate of a column 16 is a part of the mass of the transition base 10 and takes on vibratory energy. Further, the aggregate may respond with motion independent of the encasing transition base 10, including motion that is out of phase with the exciting vibration and therefore cancels, at least to some extent, the exciting vibration energy.

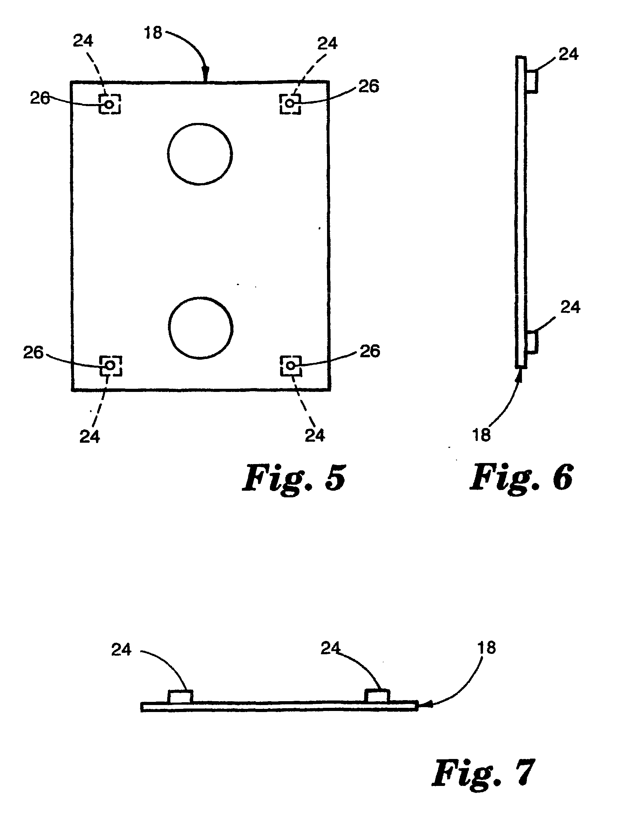

The damping element may be either sealed or unsealed in a column tube 16. Access for adjustment, fine tuning, of the aggregate is provided with access holes 30 in the top plate 18 (FIG. 5). Openings 30 make it possible to adjust the contents of the interior of tubes 22 as desired. Thus, the filling material may be changed, adjusted or removed to suit a particular situation. While hollow tubes 16 and 22 are shown in the illustrated embodiment of the transition base, the base may also employ solid columns, which may be formed as cylinders or other shapes, instead of hollow tubes, and these also serve to eliminate or reduce vibration and noise from the operation of an industrial electric rotating apparatus generator by either absorbing or dispersing vibration frequencies. As a further modification, when tubes are employed, the tubes can be filled with other filler materials, such as rubber or other resilient material that dampens vibration.

The drawing illustrates a couple of alternative embodiments of the structural element and the damping element of a column 16 as separable components. As noted above, the ribs 20 may be used in the present invention to "tune" the transition base relative to vibration damping issues. Use of buttressing ribs is commonly known for increasing racking stiffness of a structure. Further, the manner in which the ribs are implemented influences the natural frequency of the structure and the harmonics of the structure.

The gauge and the configuration of the ribs may influence the harmonics of the structure, including whether the ribs are uniform or are made inconsistent by design to control vibrations. A range of rib configurations may be understood to extend from a full triangular element as shown to merely a relatively slender elongated member that extends along the location of the hypotenuse of the illustrated full triangular element.

When a full triangular rib element is used, for example, its attachment may also impact the transition base harmonics. Continuous welding along the base plate and the column tube sides of the rib will provide stiffened regions of each of the base plate 12 and the column tube 16 at the rib, as well as stiffening the rib itself. Alternatively, intermittent welding in the same areas further localizes the stiffened areas and may potentially create strategically positioned nodes. It is also noted that the stiffening occurs both because of the total geometry of the connected components, the base plate 12, the column 16, and the rib 20, in this specific instance, and because of the stiffening of the welding itself. Now, one having ordinary skill in the art and one who uses the invention will understand that additional fine tuning may be effected merely with a pattern of welding upon the column tube 16 or other transition base components. Such factors as weld depth, length, shape, and placement, to name a few factors, will influence local weld stiffening of the column tube 16, for example, and the propagation or throttling of vibration through the transition base.

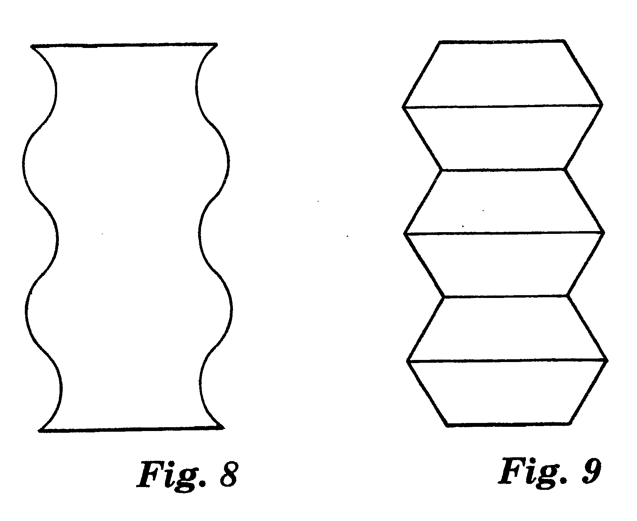

Stepping back from the localized tuning effects of welding and the like just discussed, to more global design considerations, exemplary alternative configurations of the columns 16 are illustrated in the drawing. More specifically, the shape of the column influences the column harmonics and in turn the transition base harmonics. One alternative column configuration of a smoothly undulating exterior column surface is shown in FIG. 8, while a sharply undulating or faceted exterior column surface is shown in FIG. 9. Of course, these illustrations are not limiting on the variety of configurations that may be used. One who uses the invention and one having ordinary skill in the art will understand from this disclosure that either or both of the interior and exterior surfaces may be made with various combinations of a variety of undulating and straight configurations according to requirements of a given transition base use. When undulations are employed, they may be regular like a sine-wave or irregular like ocean waves, for example. When cooperating undulations are employed, they may be in phase or not in phase. It is also noted that a smoothly undulating column surface (FIG. 8) may tend to dissipate a vibration, while a sharply undulating or faceted surface (FIG. 9) with sharp apexes, may tend to focus and even amplify vibration. Each of these characteristics may be used advantageously in foundation design.

Various relational terms, including left, right, front, back, top, and bottom, for example, are used in the detailed description of the invention and in the claims only to convey relative positioning of various elements of the claimed invention.

## Claims

1. A transition base (10) for damping vibration between an industrial rotating apparatus and an associated foundation, the transition base comprising:
a first mounting surface (12) that faces in a first direction;
a second mounting surface (18) that faces in a second direction, the second direction being opposite to the first direction;
a plurality of tubular members (16) that are disposed between the first and the second mounting surfaces (12, 18), each tubular member (16) having a column length that extends between the first and the second mounting surfaces (12, 18), having a structural element including an interior cavity, and having a damping element, each of the structural and the damping elements extending along the tubular member length, the damping elements being located in the interior cavity of the structural elements wherein the damping element is pourable aggregate material **characterized in that** the second mounting surface is provided with access holes to change, adjust or remove the aggregate material to suit a particular situation for eliminating vibration from the operation of the industrial rotating apparatus by either absorbing or dispersing vibration frequencies.

2. The transition base of claim 1 in which at least one of the plurality of columns (16) is formed with an undulating exterior surface.

3. The transition base of claim 2 in which the undulating exterior surface defines a preselected pattern of ridges and valleys that is adapted to minimize a pre-identified vibration.

4. The transition base (10) according to any one of the preceding claims, wherein the transition base (10) is adapted to fit a replacement mechanical apparatus to a preexisting foundation of a prior mechanical apparatus, wherein the first mounting surface comprises a first mounting plate (12) that is adapted to mate with the preexisting foundation; and wherein the second mounting surface comprises a second mounting plate (18) that is adapted to mate with the replacement mechanical apparatus.

5. A method of fitting a replacement mechanical apparatus to a preexisting foundation of a prior mechanical apparatus, providing a transition base (10), preferably according to any one of the preceding claims, comprising the steps of:
providing a first mounting surface (12) that is adapted to mate with the preexisting foundation;
providing a second mounting surface (18) that is adapted to mate with the replacement mechanical apparatus;
providing a plurality of tubular members (16) that are disposed between the first and the second mounting surfaces, each tubular member having a column length that extends between the first and the second mounting surfaces, having a structural element including an interior cavity, and having a damping element, each of the structural and the damping elements extending along the column length, the damping elements being located in the interior cavity of the structural elements, wherein the damping element is pourable aggregate material **characterized in that** the second mounting surface is provided with access holes to change, adjust or remove the aggregate material to suit a particular situation for eliminating vibration from the operation of the industrial rotating apparatus by either absorbing or dispersing vibration frequencies.

6. The method of claim 5, further including the step of providing at least one of the plurality of columns with an undulating exterior surface.

7. The method of claim 6, further including the step of adapting the undulating exterior surface to define a preselected pattern of ridges and valleys that is adapted to minimize a pre-identified vibration.

## Patentansprüche

1. Übergangsbasis (10) zum Dämpfen der Schwingung zwischen einer industriellen Rotationsmaschine und einem dazugehörigen Fundament, wobei die Übergangsbasis Folgendes umfasst:
eine erste Montagefläche (12), die in eine erste Richtung zeigt;
eine zweite Montagefläche (18), die in eine zweite Richtung zeigt, wobei die zweite Richtung der ersten Richtung entgegengesetzt verläuft;
mehrere röhrenförmige Elemente (16), die zwischen der ersten und der zweiten Montagefläche (12, 18) angeordnet sind, wobei jedes röhrenförmige Element (16) eine Säulenlänge aufweist, die sich zwischen der ersten und der zweiten Montagefläche (12, 18) erstreckt, mit einem Strukturelement einschließlich eines Innenhohlraums und mit einem Dämpfungselement, wobei jedes der Strukturelemente und der Dämpfungselemente sich entlang der Länge des röhrenförmigen Elements erstrecken, wobei die Dämpfungselemente in dem Innenhohlraum der Strukturelemente angeordnet sind, wobei das Dämpfungselement ein gießbares Aggregatmaterial ist, **dadurch gekennzeichnet, dass** die zweite Montagefläche mit Zugangsöffnungen versehen ist, um das Aggregatmaterial entsprechend einer bestimmten Situation zu ändern, anzupassen oder zu entfernen, um Schwingungen vom Betrieb der industriellen Rotationsmaschine entweder durch Absorbieren oder Verteilen von Schwingungsfrequenzen zu beseitigen.

2. Übergangsbasis nach Anspruch 1, wobei mindestens eine der mehreren Säulen (16) mit einer wellenförmigen Außenfläche gebildet ist.

3. Übergangsbasis nach Anspruch 2, wobei die wellenförmige Außenfläche ein vorgewähltes Muster von Erhöhungen und Tälern definiert, das angepasst ist, um eine voridentifizierte Schwingung zu minimieren.

4. Übergangsbasis (10) nach einem der vorhergehenden Ansprüche, wobei die Übergangsbasis (10) angepasst ist, um eine mechanische Ersatzvorrichtung an einem vorher existierenden Fundament einer früheren mechanischen Vorrichtung anzubringen, wobei die erste Montagefläche eine erste Montageplatte (12) umfasst, die angepasst ist, um mit dem vorher existierenden Fundament zusammenzupassen, und wobei die zweite Montagefläche eine zweite Montageplatte (18) umfasst, die angepasst ist, um mit der mechanischen Ersatzvorrichtung zusammenzupassen.

5. Verfahren zum Anbringen einer mechanischen Ersatzvorrichtung an einem vorher existierenden Fundament einer früheren mechanischen Vorrichtung, wobei eine Übergangsbasis (10) bereitgestellt wird, vorzugsweise nach einem der vorhergehenden Ansprüche, umfassend folgende Schritte:
- Bereitstellen einer ersten Montagefläche (12), die angepasst ist, um mit dem vorher existierenden Fundament zusammenzupassen;
- Bereitstellen einer zweiten Montagefläche (18), die angepasst ist, um mit der mechanischen Ersatzvorrichtung zusammenzupassen;
- Bereitstellen mehrerer röhrenförmiger Elemente (16), die zwischen den ersten und zweiten Montageflächen angeordnet sind, wobei jedes Element eine Säulenlänge hat, die sich zwischen ersten und zweiten Montageflächen erstreckt, die ein Strukturelement einschließlich eines Innenhohlraums und ein Dämpfungselement aufweisen, wobei jedes der Struktur- und Dämpfungselemente entlang der Säulenlänge verläuft, wobei die Dämpfungselemente in dem Innenhohlraum der Strukturelemente angeordnet sind, wobei das Dämpfungselement ein gießbares Aggregatmaterial ist, **dadurch gekennzeichnet, dass** die zweite Montagefläche mit Zugangsöffnungen versehen ist, um das Aggregatmaterial entsprechend einer bestimmten Situation zu ändern, anzupassen oder zu entfernen, um Schwingungen vom Betrieb der industriellen Rotationsmaschine entweder durch Absorbieren oder Verteilen von Schwingungsfrequenzen zu beseitigen.

6. Verfahren nach Anspruch 5, ferner umfassend den Schritt des Bereitstellens von mindestens einer von mehreren Säulen mit einer wellenförmigen Außenfläche.

7. Verfahren nach Anspruch 6, ferner umfassend den Schritt des Anpassens der wellenförmigen Außenfläche, um ein vordefiniertes Muster von Erhöhungen und Tälern zu definieren, das angepasst ist, um eine vorher identifizierte Schwingung zu minimieren.

## Revendications

1. Base de transition (10) pour amortir la vibration entre un appareil rotatif industriel et une fondation associée, la base de transition comprenant:
une première surface de montage (12) qui est orientée dans une première direction ;
une seconde surface de montage (18) qui est orientée dans une seconde direction, la seconde direction étant opposée à la première direction ;
une pluralité d'éléments tubulaires (16) qui sont disposés entre la première et la seconde surface de montage (12, 18), chaque élément tubulaire (16) ayant une longueur de colonne qui s'étend entre la première et la seconde surface de montage (12, 18), ayant un élément structurel comprenant une cavité intérieure, et ayant un élément d'amortissement, chacun parmi les éléments structurels et les éléments d'amortissement s'étendant le long de la longueur de l'élément tubulaire, les éléments d'amortissement étant positionnés dans une cavité inférieure des éléments structurels, dans laquelle l'élément d'amortissement est un matériau d'agrégat déversable, **caractérisée en ce que** la seconde surface de montage est prévue avec des trous d'accès pour modifier, ajuster ou retirer le matériau d'agrégat pour s'adapter à une situation particulière consistant à supprimer la vibration du fonctionnement de l'appareil rotatif industriel en absorbant ou en dispersant les fréquences de vibration.

2. Base de transition selon la revendication 1, dans laquelle au moins l'une de la pluralité de colonnes (16) est formée avec une surface extérieure ondulante.

3. Base de transition selon la revendication 2, dans laquelle la surface extérieure ondulante définit un modèle présélectionné de crêtes et de creux qui est adapté pour minimiser une vibration pré-identifiée.

4. Base de transition (10) selon l'une quelconque des revendications précédentes, dans laquelle la base de transition (10) est adaptée pour adapter un appareil mécanique de remplacement à une fondation préexistante d'un appareil mécanique antérieur, dans laquelle la première surface de montage comprend une première plaque de montage (12) qui est adaptée pour se coupler avec la fondation préexistante ; et dans laquelle la seconde surface de montage comprend une seconde plaque de montage (18) qui est adaptée pour se coupler avec l'appareil mécanique de remplacement.

5. Procédé pour adapter un appareil mécanique de remplacement à une fondation préexistante d'un appareil mécanique antérieur, consistant à prévoir une base de transition (10), de préférence selon l'une quelconque des revendications précédentes, comprenant les étapes consistant à :
prévoir une première surface de montage (12) qui est adaptée pour se coupler avec la fondation préexistante ;
prévoir une seconde surface de montage (18) qui est adaptée pour se coupler avec l'appareil mécanique de remplacement ;
prévoir une pluralité d'éléments tubulaires (16) qui sont disposés entre la première et la seconde surface de montage, chaque élément tubulaire ayant une longueur de colonne qui s'étend entre la première et la seconde surface de montage, ayant un élément structurel comprenant une cavité intérieure, et ayant un élément d'amortissement, chacun des éléments structurels et des éléments d'amortissement s'étendant le long de la longueur de la colonne, les éléments d'amortissement étant positionnés dans la cavité intérieure des éléments structurels, dans lequel l'élément d'amortissement est un matériau d'agrégat déversable, **caractérisé en ce que** la seconde surface de montage est prévue avec des trous d'accès pour modifier, ajuster ou retirer le matériau d'agrégat pour s'adapter à une situation particulière consistant à supprimer la vibration du fonctionnement de l'appareil rotatif industriel en absorbant ou bien en dispersant les fréquences de vibration.

6. Procédé selon la revendication 5, comprenant en outre l'étape consistant à prévoir au moins l'une de la pluralité de colonnes avec une surface extérieure ondulante.

7. Procédé selon la revendication 6, comprenant en outre l'étape consistant à adapter la surface extérieure ondulante pour définir un modèle présélectionné de crêtes et de creux qui est adapté pour minimiser une vibration pré-identifiée.
